(19) Europäisches Patentamt
European Patent Office
Office européen des brevets

(11) EP 2 102 278 B1

(12) **EUROPEAN PATENT SPECIFICATION**

(45) Date of publication and mention of the grant of the patent:
**20.04.2011 Bulletin 2011/16**

(21) Application number: **07765083.6**

(22) Date of filing: **05.07.2007**

(51) Int Cl.:
***C08K 5/00*** *(2006.01)*

(86) International application number:
**PCT/EP2007/005962**

(87) International publication number:
**WO 2008/003497 (10.01.2008 Gazette 2008/02)**

# (54) UNSATURATED POLYESTER RESIN OR VINYL ESTER RESIN COMPOSITIONS

UNGESÄTTIGTES POLYESTERHARZ ODER VINYLESTERHARZ ENTHALTENDE ZUSAMMENSETZUNGEN

COMPOSITIONS DE RÉSINE DE POLYESTER INSATURÉ OU DE RÉSINE D’ESTER VINYLIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **06.07.2006 EP 06014012**

(43) Date of publication of application:
**23.09.2009 Bulletin 2009/39**

(73) Proprietor: **DSM IP Assets B.V.**
**6411 TE Heerlen (NL)**

(72) Inventors:
- **JANSEN, Johan, Franz, Gradus, Antonius**
**NL-6165 AP Geleen (NL)**
- **KRAEGER, Ronald, Ivo**
**3812 HE Amersfoort (NL)**

(74) Representative: **Verhaegen, Ilse Maria M. et al**
**DSM Intellectual Property**
**Office Geleen**
**P.O. Box 9**
**6160 MA Geleen (NL)**

(56) References cited:
**EP-A- 0 761 737**
**US-A- 4 524 177**
**US-A- 5 235 010**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to two-component composition comprising a first component and a second component; the first component comprising an unsaturated polyester resin or vinyl ester resin and the second component comprising a peroxide compound having formula ROOH, in which R is hydrogen or an optionally substituted alkyl group. In particular, the present invention relates to two-component unsaturated polyester resin or vinyl ester resin compositions for structural parts.

The present invention further also relates to objects and structural parts prepared from such two-component compositions. The present invention finally also relates to a process for curing such two-component compositions.

As meant herein, objects and structural parts are considered to have a thickness of at least 0,5 mm and appropriate mechanical properties. The term "objects and structural parts" as meant herein also includes cured resin compositions as are used in the field of chemical anchoring, construction, roofing, flooring, windmill blades, containers, tanks, pipes, automotive parts, boats, etc.

As used herein, the term "two-component system" refers to systems where two separate components (A and B) are being spatially separated from each other, for instance in separate cartridges or the like, and is intended to include any system wherein each of such two separate components (A and B) may contain further separate components. The components are combined at the time the system is used.

In the curing of unsaturated polyester resins and vinyl ester resins, classes of resins that can generally be cured under the influence of peroxides, gel time is a very important characteristic of the curing properties. In addition also the time from reaching the gel time to reaching peak temperature, and the level of the peak temperature (higher peak temperature generally results in better curing) are important. Apart from that, of course, also the mechanical properties of the objects and/or structural parts obtained in the curing process are important. As meant herein gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. Accordingly, the term good curing properties reflects, amongst other things, that the resin composition has suitable gel-time properties: i.e. the resin to be cured should remain sufficiently fluid for an acceptable time in the first stage of curing. For good curing properties it is important, that the gel time is rather short, i.e. in the order of some minutes to few tens of minutes. For reasons of process efficiency and results to be achieved, the skilled man accordingly will always try to find options to achieve a minimal gel time, while retaining good mechanical properties of the ultimately cured products. In addition, the skilled man also will try to find curable resin compositions having good storage stability, i.e. being stable (i.e. remain their handling properties without gellification) before being subjected to curing for at least one week after manufacture of the resin composition.

The styrene content in the objects obtained after curing the resin composition is an important factor in the determination how efficient a cure system is. Preferable the residual amount of styrene after cure is as low as possible as this implies that the curing is very efficient. Furthermore, low residual amount of styrene results in lower styrene emission which is advantageous from an environmental point of view. Post-curing is often applied for small objects in order to reduce styrene content in small objects. Post-curing is generally effected by storing the object at elevated temperature, for example at 80°C, for at least 24 hours.

Moreover, for environmental reasons, the presence of cobalt in resin compositions is less preferred.

W. D. Cook et al. in Polym. Int. Vol.50, 2001, at pages 129-134 describe in an interesting article various aspects of control of gel time and exotherm behavior during cure of unsaturated polyester resins. They also demonstrate how the exotherm behavior during cure of such resins can be followed.

As meant herein the term gel-time drift (for a specifically selected period of time, for instance 30 or 60 days) reflects the phenomenon, that - when curing is performed at another point of time than at the reference standard moment for curing, for instance 24 hours after preparation of the resin - the gel time observed is different from that at the point of reference. For unsaturated polyester resins and vinyl ester resins, as can generally be cured under the influence of peroxides, gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. The lower the gel-time drift is, the better predictable the behavior of the resin (and the resulting properties of the cured material) will be.

Gel time drift (hereinafter: "Gtd") can be expressed in a formula as follows:

$$Gtd = (T_{25\text{->}35°C\ \text{at y-days}} - T_{25\text{-}35°C\ \text{after mixing}}) / T_{25\text{->}35°C\ \text{after mixing}} \times 100\% \qquad \text{(formula 1)}$$

In this formula $T_{25}$-$>_{35°c}$ (which also might be represented by $T_{gel}$) represents, as mentioned above, the time

lapsed in the curing phase of the resin to increase in temperature from 25 °C to 35 °C. The additional reference to "at y days" shows after how many days of preparing the resin the curing is effected.

All polyester resins, by their nature, undergo some changes over time from their production till their actual curing. One of the characteristics where such changes become visible is the gel-time drift. The state of the art unsaturated polyester resin or vinyl ester resin systems generally are being cured by means of initiation systems. In general, such unsaturated polyester resin or vinyl ester resin systems are cured under the influence of peroxides and are accelerated (often even pre-accelerated) by the presence of metal compounds, especially cobalt salts, as accelerators. Cobalt naphthenate and cobalt octanoate are the most widely used accelerators. In addition to accelerators, the polyester resins usually also contain inhibitors for ensuring that the resin systems do not gellify prematurely (i.e. that they have a good storage stability). Furthermore, inhibitors are being used to ensure that the resin systems have an appropriate gel time and/or for adjusting the gel-time value of the resin system to an even more suitable value.

Most commonly, in the state of the art, polymerization initiation of unsaturated polyester resins, etc. by redox reactions involving peroxides, is accelerated or pre-accelerated by a cobalt compound in combination with another accelerator.

An excellent review article of M. Malik et al. in J.M.S. - Rev. Macromol. Chem. Phys., C40 (2&3), p.139-165 (2000) gives a good overview of the current status of resin systems.

The phenomenon of gel-time drift, indeed, so far got quite little attention in the literature. Most attention so far has been given in literature to aspects of acceleration of gel time in general, and to improving of pot-life or shelf life of resins. The latter aspects, however, are not necessarily correlated to aspects of gel-time drift, and so, the literature until now gives very little suggestions as to possible solutions for improvement of (i.e. lowering of) gel-time drift.

Accordingly, for the unsaturated polyester resins as are part of the current state of the art there is still need for finding resin systems showing reduced gel-time drift, or in other words, resin systems having only slight gel-time drift when cured with a peroxide. Preferably the mechanical properties of the resin composition after curing with a peroxide are unaffected (or improved) as a result of the changes in the resin composition for achieving the reduced gel-time drift. Moreover, for environmental reasons, the presence of cobalt in the resins is less preferred.

The present inventors now, surprisingly, found that efficient curing could be obtained by the use of a two-component composition comprising a first component and a second component, wherein the first component being a resin composition comprising an unsaturated polyester resin or vinyl ester resin, (a) an iron compound; (b) a 1,3-dioxo compound and (c) a base; the second component comprises an a peroxide compound having formula ROOH, in which R is hydrogen or an optionally substituted alkyl group; with the proviso that the resin composition being free of foaming agents.

According to the present invention compositions having good curing properties can be obtained, i.e. the compositions according to the invention have short gel time, short peak time and/or high peak temperature. In the curing of unsaturated polyester resins or vinyl esters, gel time is a very important characteristic of the curing properties. In addition also the time from reaching the gel time to reaching peak temperature, and the level of the peak temperature (higher peak temperature generally results in better curing) are important. According to the present invention resin systems with only slight gel-time drift can be obtained.

US-A-4524177 discloses the use of 1,4-dihydroxonapthalene; an iron compound, such as iron acetylacetonate, in ethylenically unsaturated hardenable compounds which are cured with a system consisting at least one tertiary arylamine and a peranhydride, such as benzoyl peroxide BPO, or percabonate as polymerisation catalyst. In this reference there is no indication that instead of the well-known BPO/aromatic amine system also a hydroperoxide can be used. Moreover, a person skilled in the art would not expect that a hydroperoxide could be used instead of a peranhydride.

US-A-5235010 discloses an accelerator composition for the curing of unsaturated polyester resins comprising a complex of at least two salts of at least two different metals selected from the group consisting of lithium, magnesium, manganese, copper, cobalt, vanadium and iron, and an organic oxygen-containing compound capable of forming a metal complex with said metal salt including at least one functional group selected from the group consisting of an aldehyde, ketone, ether, ester or alcohol group. The curing is effected using conventional peroxide initiators known for use with unsaturated polyesters, such as for example methyl ethyl ketone peroxide or acetylacetone peroxide. Further, other materials including thiols and nitrogen-containing compounds may be present during the curing process. Suitable nitrogen-containing compounds are ammonia, ammonium salts, heterocyclic nitrogeneous bases, cycloaliphatic primary amines and adducts of these materials with anhydrides or epoxides.

US-A-5451556 discloses an accelerator composition for the curing of unsaturated polyester resins comprising a salt of at least one metal chosen from among lithium, copper, magnesium, manganese, vanadium, iron and cobalt in combination with one or more compounds selected from ammonium salts of $C_2$-$C_{20}$ carboxylic acids that are capable of forming complexes with such metal salts. Preferred ammonium salts are ammonium acetate, ammonium butyrate, ammonium propionate and ammonium octoate. Other materials including thiols and oxygen-containing compounds may be present during the curing process. The organic oxygen-containing compound must be capable of forming a metal complex with said metal salt and carries at least one functional group selected from the group consisting of an aldehyde,

ketone, ether, ester or alcohol group on the molecule. Among many other organic oxygen-containing compounds, 1,3-diketones are also mentioned.

WO-A-90/12824 discloses an accelerator composition for the curing of unsaturated polyester resins comprising a salt of at least one metal chosen from among lithium, vanadium, copper, nickel, magnesium, iron and cobalt, and a nitrogen-containing compound selected from the group consisting of ammonia, ammonium salts, amides and heterocyclic nitrogen compounds. Other materials including oxygen-containing compounds may be present during the curing process. The organic oxygen-containing compound must be capable of forming a metal complex with said metal salt and the nitrogen-containing compound and carries at least one functional group selected from the group consisting of an aldehyde, ketone, ether, ester or alcohol group on the molecule. Among many other organic oxygen-containing compounds, 1,3-diketones are also mentioned.

There is no indication in these references that acceleration can also be achieved with the combination of an iron compound, a 1,3-dioxo compound and a base selected from the groups of tertiary amines, alkali metal compounds and/or earth alkaline metal compounds.

The present invention further also relates to all such objects or structural parts as are being obtained when curing the two-component compositions according to the invention. These objects and structural parts have excellent mechanical properties.

The present invention also relates to a process for radically curing the two-component composition according to the invention. It has surprisingly been found that the combination of the iron compound, the 1,3-dioxo compound and a base soluble in the resin composition accelerates the radically curing of the unsaturated polyester or vinyl ester with the peroxide. The curing is preferably effected at a temperature in the range of from -20 to +200 °C, preferably in the range of from -20 to +100 °C, and most preferably in the range of from -10 to +60 °C (so-called cold curing).

The unsaturated polyester resin or vinyl ester resin as is comprised in the resin compositions according to the present invention, may suitably be selected from the unsaturated polyester resins or vinyl ester resin as are known to the skilled man. Examples of suitable unsaturated polyester or vinyl ester resins to be used as basic resin systems in the resins of the present invention are, subdivided in the categories as classified by Malik et al., cited above.

(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A. Commonly the ones derived from 1,2-propylene glycol are used in combination with a reactive diluent such as styrene.

(2) Iso-resins: these are prepared from isophthalic acid, maleic anhydride or fumaric acid, and glycols. These resins may contain higher proportions of reactive diluent than the ortho resins.

(3) Bisphenol-A-fumarates: these are based on ethoxylated bisphenol-A and fumaric acid.

(4) Chlorendics: are resins prepared from chlorine/bromine containing anhydrides or phenols in the preparation of the UP resins.

(5) Vinyl ester resins: these are resins, which are mostly used because of their because of their hydrolytic resistance and excellent mechanical properties, as well as for their low styrene emission, are having unsaturated sites only in the terminal position, introduced by reaction of epoxy resins (e.g. diglycidyl ether of bisphenol-A, epoxies of the phenol-novolac type, or epoxies based on tetrabromobisphenol-A) with (meth)acrylic acid. Instead of (meth)acrylic acid also (meth)acrylamide may be used.

Besides these classes of resins also so-called dicyclopentadiene (DCPD) resins can be distinguished as unsaturated polyester resins.

As used herein, a vinyl ester resin is a (meth)acrylate functional resin. Besides the vinyl ester resins as described in Malik et al., also the class of vinyl ester urethane resins (or urethane methacylate resin) can be distinguished as vinyl ester resins. Preferably, the vinyl ester used in the present invention is a resin obtained by the esterification of an epoxy resin with (meth)acrylic acid or (meth)acrylamide.

All of these resins, as can suitably used in the context of the present invention, may be modified according to methods known to the skilled man, e.g. for achieving lower acid number, hydroxyl number or anhydride number, or for becoming more flexible due to insertion of flexible units in the backbone, etc. The class of DCPD-resins is obtained either by modification of any of the above resin types by Diels-Alder reaction with cyclopentadiene, or they are obtained alternatively by first reacting maleic acid with dicyclopentadiene, followed by the resin manufacture as shown above.

Of course, also other reactive groups curable by reaction with peroxides may be present in the resins, for instance reactive groups derived from itaconic acid, citraconic acid and allylic groups, etc. Accordingly, the unsaturated polyester resins or vinyl ester resins used in the present invention may contain solvents. The solvents may be inert to the resin system or may be reactive therewith during the curing step. Reactive solvents are particularly preferred. Examples of suitable reactive solvents are styrene, $\alpha$-methylstyrene, (meth)acrylates, N-vinylpyrrolidone and N-vinylcaprolactam.

The unsaturated polyester resins and vinyl ester resins as are being used in the context of the present invention may be any type of such resins, but preferably are chosen from the group of DCPD-resins, iso-phthalic resins and ortho-phthalic resins and vinyl ester resins. More detailed examples of resins belonging to such groups of resins have been shown in the foregoing part of the specification. More preferably, the resin is an unsaturated polyester resin preferably chosen from the group of DCPD-resins, iso-phthalic resins and ortho-phthalic resins.

The resin composition preferably has an acid value in the range of from 0,001 - 300 mg KOH/g of resin composition. As used herein, the acid value of the resin composition is determined titrimetrically according to ISO 2114-2000. Preferably, the molecular weight of the unsaturated polyester resin or vinyl ester resin is in the range of from 500 to 200.000 g/mole. As used herein, the molecular weight of the resin is determined using gel permeation chromatography according to ISO 13885-1.

The resin composition generally contains less than 5 wt.% water.

In the context of the invention all kinds of iron compounds can be used. According to the invention, the iron compound present in the resin composition is preferably an iron salt or complex. More preferably, the iron compound is an iron$^{2+}$ salt or complex or iron$^{3+}$ salt or complex. Even more preferably, the iron compound is an iron $^{2+}$ salt or iron $^{3+}$ salt. The iron $^{2+}$ salt is preferably organic iron $^{2+}$ salt. The iron$^{3+}$ salt is preferably an organic iron$^{3+}$ salt. The organic iron$^{2+}$ salt or the organic iron$^{3+}$ salt is preferably an iron carboxylate or an iron acetoacetate. It will be clear that, instead of a single iron compound also a mixture of iron compounds can be used.

The iron compound is preferably present in the resin composition in an amount of at least 1 mmol iron per kg of primary resin system, more preferably at least 3 mmol iron per kg of primary resin system. The upper limit of the iron content is not very critical, although for reasons of cost efficiency and/or color of course no extremely high concentrations will be applied. Generally the concentration of the iron compound in the primary resin system will be lower than 50 mmol iron per kg of primary resin system, preferably lower than 30 mmol iron per kg of primary resin system.

For understanding of the invention, and for proper assessment of the amounts of iron compound to be present in the resin composition, the term "primary resin system" as used herein is understood to mean the total weight of the resin, but excluding any fillers as may be used when applying the resin system for its intended uses. The primary resin system therefore consists of the unsaturated polyester resin or vinyl ester resin, any additives present therein (except for the peroxide component that is to be added shortly before the curing) soluble in the resin, such as accelerators, promotors, inhibitors, low-profile agents, colorants (dyes), thixotropic agents, release agents etc., as well as styrene and/or other solvents as may usually be present therein. The amount of additives soluble in the resin usually may be as from 1 to 25 wt.% of the primary resin system; the amount of styrene and/or other solvent may be as large as up to 50 wt.% of the primary resin system. The primary resin system, however, explicitly does not include compounds not being soluble therein, such as fillers (e.g. glass or carbon fibers), talc, clay, solid pigments (such as, for instance, titanium dioxide (titanium white)), flame retardants, e.g. aluminium oxide hydrates, etc.

The 1,3-dioxo compound is preferably a compound having the following formula:

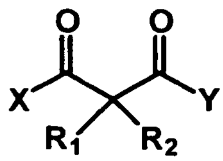

(1)

whereby

X,Y = H, $C_1$-$C_{20}$ alkyl, $C_6$-$C_{20}$ aryl, alkylaryl, arylalkyl, part of a polymer chain, $OR^3$, $NR^3R4$;

$R^1$, $R^2$, $R^3$, and $R^4$ each individually may represent hydrogen (H), or a $C_1$-$C_{20}$ alkyl, $C_6$-$C_{20}$ aryl, alkylaryl or arylalkyl group, that each optionally may contain one or more hetero-atoms (e.g. oxygen, phosphor, nitrogen or sulphur atoms) and/or substituents; a ring may be present between $R^1$ and $R^2$, $R^1$ and $R^3$, and/or between $R^2$ and $R^4$; $R^3$ and/or $R^4$ may be part of a polymer chain, may be attached to a polymer chain or may contain a polymerizable group. Preferably, X and/or Y are/is $C_1$-$C_{20}$ alkyl and/or $C_6$-$C_{20}$ aryl. More preferably, X and/or Y are/is a methyl group. Preferably, the 1,3-dioxo compound is acetylaceton. The 1,3-dioxo compound may be a polymer or is polymerizable.

Preferably, the amount of the 1,3-dioxo compound is from 0,05 to 5 % by weight, calculated on the total weight of the primary resin system of the resin composition. More preferably, amount of the 1,3-dioxo compound is from 0,5 to 2 % by weight.

The resin composition comprises a base preferably selected from a tertiary amine, an alkaline metal compound

and/or earth alkaline metal compound. As it has been found that primary and secondary amines react with the unsaturated polyester resins or vinyl ester resins via a Michael addition to the reactive double bonds (due to which the reactivity of the resin changes) these compounds are not suited as basic compounds in the resin compositions according to the invention and are therefore excluded. Preferably, the base is an alkali metal or earth alkali metal compound. The alkali metal or earth alkali metal compound is preferably an oxide, hydroxide, carboxylate, carbonate or hydrocarbonate. Preferably, the alkali metal is not lithium and the earth alkali metal is not magnesium in view of the low solubility of lithium and magnesium compounds in the resin composition. Most preferably, the base is a potassium compound. The potassium compound is preferably a potassium carboxylate, preferably a potassium $C_6$-$C_{20}$ carboxylate. In a preferred embodiment of the present invention, the potassium carboxylate is in-situ formed by adding potassium hydroxide to the resin composition.

Preferably, the amount of the base is from 0,001 to 2.000 mmol/kg of primary resin system. More preferably, the amount of the base is from 0,1 to 200 mmol/kg of primary resin system.

In the resin composition, the molar ratio between iron and the basic functionality of the base is from 20:1 to 1: 150, preferably from 1.5:1 to 1:10. The molar ratio between iron and the 1,3-dioxo compound is preferably from 10:1 to 1:500, preferably from 2:1 to 1:70. The molar ratio between the 1,3-dioxo compound and the basic functionality of the base is from 170:1 to 1:30, preferably from 15:1 to 1:3.

The second component of the two-component system comprises a peroxide compound having formula ROOH, in which R is hydrogen or an optionally substituted alkyl group. The peroxide may be solid or liquid. Examples of suitable peroxides are: tertiary alkyl hydroperoxides (such as, for instance, t-butyl hydroperoxide), other hydroperoxides (such as, for instance, cumene hydroperoxide), the special class of hydroperoxides formed by the group of ketone peroxides (perketones, being an addition product of hydrogen peroxide and a ketone, such as, for instance, methyl ethyl ketone peroxide and acetylacetone peroxide). Often the organic peroxides used as curing agent are tertiary hydroperoxides, i.e. peroxy compounds having tertiary carbon atoms directly united to a -OOH group. Clearly also mixtures of these peroxides with other peroxides may be used in the context of the present invention. The peroxides may also be mixed peroxides, i.e. peroxides containing any two of different peroxygen-bearing moieties in one molecule).

Most preferably, however, the peroxide is a liquid hydroperoxide. The liquid hydroperoxide, of course, also may be a mixture of hydroperoxides. Handling of liquid hydroperoxides when curing the resins for their final use is generally easier: they have better mixing properties and dissolve more quickly in the resin to be cured.

In particular it is preferred that the peroxide is selected from the group of ketone peroxides, a special class of hydroperoxides. The peroxide being most preferred in terms of handling properties and economics is methyl ethyl ketone peroxide (MEK peroxide).

In a preferred embodiment of the invention, the resin composition of the two-component composition also contains one or more reactive diluents preferably in an amount of at least 5 weight%.

Such reactive diluents are especially relevant for reducing the viscosity of the resin in order to improve the resin handling properties, particularly for being used in techniques like vacuum injection, etc. However, the amount of such reactive diluent in the resin composition according to the invention is not critical. Preferably, the reactive diluent is a methacrylate and/or styrene.

In a further preferred embodiment of the present invention, the resin composition also contains one or more radical inhibitors.

More preferably, the resin compositions also contains a radical inhibitor, preferably chosen from the group of phenolic compounds, stable radicals like galvinoxyl and N-oxyl based compounds, catechols and/or phenothiazines.

The amount of radical inhibitor as used in the context of the present invention, may, however, vary within rather wide ranges, and may be chosen as a first indication of the gel time as is desired to be achieved. Preferably, the amount of phenolic inhibitor is from about 0,001 to 35 mmol per kg of primary resin system, and more preferably it amounts to more than 0,01, most preferably more than 0,1 mmol per kg of primary resin system. The skilled man quite easily can assess, in dependence of the type of inhibitor selected, which amount thereof leads to good results according to the invention.

Suitable examples of radical inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethylphenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), aluminium-N-nitrosophenyl hydroxylamine, diethylhydroxylamine, phenothiazine and/or derivatives or combinations of any of these compounds.

Advantageously, the amount of radical inhibitor in the resin composition is in the range of from 0,0001 to 10 % by weight, calculated on the total weight of the primary resin system of the resin composition. More preferably, the amount of radical inhibitor in the resin composition is in the range of from 0,001 to 1 % by weight.

In specifically preferred embodiments of the invention the two-component composition is essentially free of cobalt. Essentially free of cobalt means that the cobalt concentration is lower than 0,01 mmol Co per kg primary resin system, preferably lower than 0,001 mmol Co per kg primary resin system. Most preferably the two-component composition is free of cobalt.

The two-component composition and the resin composition according to the present invention can be applied in all applications as are usual for such types of resins. In particular they can suitably used in closed mould applications, but they also can be applied in open mould applications. For closed mould applications it is especially important that the manufacturer of the closed mould products reliably can use the favorable (i.e. reduced) gel-time drift tendency of the resin compositions according to the invention. End segments where the unsaturated polyester resin or vinyl ester resin compositions according to the present invention can be applied are also marine applications, chemical anchoring, roofing, construction, relining, pipes & tanks, flooring, windmill blades, etc. That is to say, the resin compositions according to the invention can be used in all known uses of unsaturated polyester resins and vinyl ester resins.

The invention is now demonstrated by means of a series of examples and comparative examples. All examples are supportive of the scope of claims. The invention, however, is not restricted to the specific embodiments as shown in the examples.

Experimental part

The resins used for curing are commercially available products from DSM Composite Resins B.V., Schaffhausen, Switzerland, and and in addition thereto also a resin -hereinafter referred to as Resin A- was specifically prepared on behalf of the inventors for being used in the tests. The peroxides used for curing are commercially available products from Akzo Nobel Inc.

Preparation of Resin A

184,8 g of propylene glycol (PG), 135,8 g of diethylene glycol (DEG), 216,1 g of phthalic anhydride (PAN), 172,8 g of maleic anhydride (MAN), and 0.075 g 2-t-butylhydroquinone were charged in a vessel equipped with a reflux condenser, a temperature measurement device and inert gas inlet. The mixture was heated slowly by usual methods to 205 °C. At 205 °C the mixture was kept under reduced pressure until the acid value reached a value below 16 mg KOH/g resin and the falling ball viscosity at 100 °C was below 50 dPa.s. Then the vacuum was relieved with inert gas, and the mixture was cooled down to 130 °C, and thereafter the solid UP resin so obtained was transferred to a mixture of 355 g of styrene and 0,07 g of mono-t-butylhydroquinone and was dissolved at a temperature below 80 °C. The final resin viscosity reached at 23 °C was 640 mPa.s, and the Non Volatile Matter content was 64,5 wt.%.

Monitoring of curing

In most of the Examples and Comparative Examples presented hereinafter it is mentioned, that curing was monitored by means of standard gel time equipment. This is intended to mean that both the gel time ($T_{gel}$ or $T_{25\text{->}35°C}$) and peak time ($T_{peak}$ or $T_{25\text{->}peak}$) were determined by exotherm measurements according to the method of DIN 16945 when curing the resin with the peroxides as indicated in the Examples and Comparative Examples. The equipment used therefore was a Soform gel timer, with a Peakpro software package and National Instruments hardware; the waterbath and thermostat used were respectively Haake W26, and Haake DL30.

For some of the Examples and Comparative Examples also the gel-time drift (Gtd) was calculated. This was done on the basis of the gel times determined at different dates of curing according to formula 1:

$$Gtd = (T_{25\text{->}35°C\text{ at y-days}} - T_{25\text{->}35°C\text{ after mixing}}) / T_{25\text{->}35°C\text{ after mixing}} \times 100\% \qquad \text{(formula 1)}$$

with "y" indicating the number of days after mixing.

Examples 1a-1d and Comparative Experiments A-D

Formulations were prepared based on 90 g resin A, 10g styrene, 0,14g Fe naphtenate solution (12% Fe), 1g 1,3-dioxo compound and 1 g K octanoate solution (15% in PEG) as the base. Curing was performed using 3 % (relative to the primary resin system) Butanox M-50 and monitored in the gel-timer at 25°C. The results are shown in table 1 together with the comparative experiments without base.

Table 1

| | 1,3-dioxo | base | Tgel (min) | T peak (min) | peak temp (°C) |
|---|---|---|---|---|---|
| Ex. 1a | acetyl acetone | yes | 9 | 25 | 162 |
| Comp. A | acetyl acetone | no | >1200 | | |
| Ex. 1b | ethyl acetoacetate | yes | 10,8 | 32 | 64 |
| Comp. B | ethyl acetoacetate | no | >1200 | | |
| Ex.1c | phenyl 1,3-butanedione | yes | 7,2 | 24,3 | 153 |
| Comp. C | phenyl 1,3-butanedione | no | >1200 | | |
| Ex. 1d | 1,3-diphenyl propane dione | yes | 13 | 38,6 | 73 |
| Comp. D | 1,3-diphenyl propane dione | no | >1200 | | |
| Ex. 1e | dimethyl malonate | yes | 13 | 34 | 56 |
| Comp. E | dimethyl malonate | no | >1200 | | |
| Ex. 1f | 2-acetyl-1,3-indanone | yes | 6,5 | 11,6 | 188 |
| Comp. F | 2-acetyl-1,3-indanone | no | >1200 | | |
| Ex. 1g | triacetyl methane | yes | 8,8 | 17,2 | 185 |
| Comp. G | triacetyl methane | no | >1200 | | |
| Comp. H | None | yes | >1200 | | |
| Comp. I (no iron) | dimethylmalonate | yes | >1200 | | |

From the results presented in this table it is clear that an iron compound, a 1,3-dioxo compound and a base are required for an efficient curing. Furthermore form this table it can be concluded that 1,3-dioxo compounds with a keto group are more efficient, especially 1,3-diketo compounds.

Examples 2a-2d

Formulations were prepared based on 90 g resin A, 10 g styrene, 0,14g Fe naphtenate solution (12% Fe), 1g acetyl acetone and 16 mmol/kg base. Curing was performed using 3 % (relative to the primary resin system) Butanox M-50 and monitored in the geltimer. The results are shown in table 2.

Table 2

| Example | base | Tgel (min) | T peak (min) | peak temp (°C) |
|---|---|---|---|---|
| 2a | K octanoate (15% in PEG) | 9 | 25 | 162 |
| 2b | KOH (50% in water) | 20 | 51 | 56 |
| 2c | $BU_4NOH$ (40% in water | 37 | 72 | 48 |
| 2d | DBU (1,8-Diazabicyclo[5.4.0]undec-7-ene) | 15 | 53 | 100 |
| 2e | N,N-dimethylethanolamine | 82 | 108 | 37 |

These examples illustrate that various bases, both organic as well as inorganic can be used.

Examples 3a-3f

Formulations were prepared based on 90 g resin A, 10g styrene, 0,14g Fe naphtenate solution (12% Fe), various amounts of 1,3-dioxo compound and 1 g K octanoate solution (15% in PEG) as the base. Curing was performed using 3 % Butanox M-50 and monitored in the geltimer. The results are shown in table 3.

Table 3

| Example | 1,3 dioxo | amount g | Tgel (min) | T peak (min) | peak temp (°C) |
|---|---|---|---|---|---|
| 3a | acetylacetone | 0,5 | 7 | 17 | 183 |
| 3b | | 1 | 9 | 25 | 162 |
| 3c | | 2 | 11 | 37 | 62 |
| 3d | ethylacetoacetate | 0,5 | 21 | 43 | 47 |
| 3e | | 1 | 20 | 45 | 51 |
| 3f | | 2 | 16 | 49 | 110 |

These results indicate that the curing can be tuned with the amount and type of 1,3-dioxo compound

Examples 4a-4f

Formulations were prepared based on 90 g resin A, 10g styrene, 0,16g Fe naphtenate solution (12% Fe), 1,1g acetylacetone and variable amounts of K octanoate solution (15% in PEG) as the base. Curing was performed using 3 % (relative to the primary resin system) Butanox M-50 and monitored in the geltimer. The results are shown in table 4.

Table 4

| Example | Koct (g) | Tgel (min) | T peak (min) | peak temp (°C) |
|---|---|---|---|---|
| 4a | 0,05 | 35 | 61 | 41 |
| 4b | 0,2 | 15 | 43 | 135 |
| 4c | 0,5 | 9 | 24 | 169 |
| 4d | 1 | 6 | 19 | 174 |
| 4e | 2 | 6 | 19 | 172 |
| 4f | 5 | 16 | 27 | 168 |

These results indicate that for a real efficient curing the amount of base is at least 1 mmol base/kg resin.

Examples 5a-5f

Formulations were prepared based on 90 g resin A, 10g styrene, variable amounts of Fe naphtenate solution (12% Fe), 1,5g of acetylacetone and 1,2 g
K octanoate solution (15% in PEG) as the base. Curing was performed using 3 % (relative to the primary resin system) Butanox M-50 and monitored in the geltimer. The results are shown in table 5.

Table 5

| Example | Fe (mmol Fe/ kg primary resin) | Tgel (min) | T peak (min) | peak temp (°C) |
|---|---|---|---|---|
| Comp J | 0 | >1200 | | |
| 5a | 1 | 59 | 80 | 36 |
| 5b | 3 | 11 | 26 | 165 |
| 5c | 5 | 9 | 23 | 169 |
| 5d | 10 | 6 | 15 | 185 |

(continued)

| Example | Fe (mmol Fe/ kg primary resin) | Tgel (min) | T peak (min) | peak temp (°C) |
|---|---|---|---|---|
| 5e | 20 | 3 | 9 | 192 |

These results indicate that at least 1 mmol iron /kg resin has to be present for an efficient curing

Examples 6a-6i

Formulations were prepared based on 90 g resin A, 10 g styrene variable amounts of Fe naphtenate solution (12% Fe) (Fe), acetylacetone (acac) and K octanoate solution (15% in PEG) (K oct). Curing was performed using 3 % (relative to the primary resin system) Butanox M50 and monitored in the geltimer. The results are shown in table 6.

Table 6

| Example | Fe (g) | acac(g) | K oct (g) | Tgel (min) | T peak (min) | peak temp (°C) |
|---|---|---|---|---|---|---|
| 6a | 0,1623 | 0,105 | 0,106 | 22,5 | 34,1 | 178 |
| 6b | 0,0461 | 1,005 | 1,005 | 14,8 | 42,9 | 58 |
| 6c | 0,2798 | 0,549 | 1,006 | 5,2 | 11,5 | 195 |
| 6d | 0,1629 | 0,5511 | 0,5509 | 8,7 | 18 | 189 |
| 6e | 0,2786 | 0,0992 | 0,1009 | 17,7 | 26 | 187 |
| 6f | 0,2801 | 0,9991 | 0,5504 | 7,3 | 16,3 | 191 |
| 6g | 0,1626 | 0,5553 | 0,1003 | 22,8 | 41,2 | 165 |
| 6h | 0,2787 | 0,5575 | 0,0996 | 15,7 | 25,5 | 187 |
| 6i | 0,2794 | 0,1002 | 0,999 | 6,1 | 12 | 193 |

These results indicate that the gel time, peak time and peak temperature can be tuned using various amounts of iron, base and 1,3-dioxo compound.

Examples 7a-7f

Formulations were prepared based on various resins, 0,14g Fe naphtenate solution (12% Fe), 1.g acetylacetone and 1 g K octanoate solution (15% in PEG) as the base.

A separate set formulations was prepared and 0,04g t-butylcathecol as inhibitor was added to further tune the gel time. Curing was performed using 3 % (relative to the primary resin system) Butanox M50 and monitored in the geltimer. The results are shown in table 7.

Table 7

| | resin (g) | styrene (g) | inhibitor | Tgel |
|---|---|---|---|---|
| 7a | Palatal P 4- 01 (90) | 10 | n | 29 |
| 7b | | | y | 323 |
| 7c | Palatal P 6 - 01 (90) | 10 | n | 9 |
| 7d | | | y | 168 |
| 7e | Daron X P45-A-2 (100) | 0 | n | 35 |
| 7f | | | y | 82 |

These results indicate that inhibitors can be used to further tune the gel time. Furthermore it shows that both unsaturated polyesters as well as vinyl esters can be cured according to the invention.

Example 8

The formulation of Example 7f was prepared on a 200g scale and split in 2 portions of 100 g each. The first portions was cured using 3% (relative to the primary resin system) Butanox M50 immediately after mixing yielding the following cure characteristics Tgel=82 min, Tpeak =96 min, peak temp =152°C.

The second portion was cured with peroxide after 95 days of storage yielding the following cure characteristics Tgel=83 min, Tpeak =99 min, temp =149°C. The gel time drift of this example was 1%.

This example demonstrates that with the cure system according to the invention drift free resin systems can be obtained.

Examples 9a-9c

Formulations were prepared based on 90 g resin A, 10 g styrene, 0,14 g Fe naphtenate solution (12% Fe), 1g 1,3-dioxo compound and 1 g K octanoate solution (15% in PEG) as the base. Curing was performed using 3% (relative to the primary resin system) of various peroxides and monitored in the gel-timer. The resulting gel times are:Trigonox 44B Tgel=9 min; Cyclonox LE50 Tgel=8 min, Hydrogen peroxide Tgel =26 min.

Using peranhydrides like Perkadox 20S, Perkadox 50L or a perester like Trigonox C resulted in no curing at all during at least 1200 min.

This result demonstrates that multiple hydroperoxides including ketone peroxides can be used in combination with the cure system according to the invention whereas peranhydrides and peresters did not result in curing.

Examples 10a-10b

Two castings of 4 mm were prepared based on 500g resin A according to the formulations described below (all amounts are in grams) and cured with Butanox M-50 . The 4 mm castings were made between hardened borosilicate glass that was separated with a 4mm EPDM U-shaped rim The casting were released and post cured during 24hrs at 60°C and 24hrs at 80°C. Mechanical properties of the cured objects were determined according to ISO 527-2. The Heat Distortion Temperature (HDT) was measured according to ISO 75-Ae. Residual styrene contents were measured by gaschromatography using GC-FID (Gas Chromatography with a Flame Ionization Detector), using butylbenzene as an internal standard, after extraction of the cured objects in dichloromethane for 48 hrs.

Table 8

| | 10a | 10b |
|---|---|---|
| resin A | 500 | 500 |
| 1,3-dioxo | 2,50(acetylacetone) | 1,00 (acetoacetamide) |
| Koctanoate in PEG | 5 | 2,26 |
| Nuodex Fe (6% Fe) | 1.4 | 1,40 |
| t-butyl catechol | 0,012 | 0 |
| Butanox M50 | 10 | 10 |
| | | |
| HDT (°C) | 66 | 69 |
| tensile (Mpa) | 83 | 64 |
| Emod (Gpa) | 3,6 | 3,6 |
| E at B (%) | 3,9 | 2,1 |
| rest styrene (%) | <0,1 | <0,1 |
| barcol | 42 | 43 |

These experiments clearly demonstrate that materials with properties suitable for construction purposes can be obtained with the cure system according to the invention.

## Claims

1. Two-component composition comprising a first component and a second component, wherein the first component being a resin composition comprising an unsaturated polyester resin or vinyl ester resin, an iron compound; a 1,3-dioxo compound and a base; the second component comprises a peroxide compound having formula ROOH, in which R is hydrogen or an optionally substituted alkyl group; with the proviso that the resin composition being free of foaming agents.

2. Two-component composition according to claim 1, **characterized in that** the base is selected from the group of tertiary amines, alkali metal compounds and/or earth alkaline metal compounds

3. Two-component composition according to claim 1 or 2, **characterized in that** the iron compound is an iron carboxylate or an iron acetoacetate.

4. Two-component composition according to anyone of claims 1-3, **characterized in that** the 1,3-dioxo compound is a compound having the following formula:

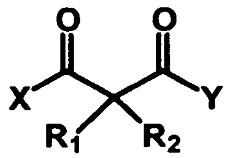

(1)

whereby

X,Y = H, $C_1$-$C_{20}$ alkyl, $C_6$-$C_{20}$ aryl, alkylaryl, arylalkyl, part of a polymer chain, $OR^3$, NR $^3R^4$;
$R^1$, $R^2$, $R^3$, and $R^4$ each individually may represent hydrogen (H), or a $C_1$-$C_{20}$ alkyl, $C_6$-$C_{20}$ aryl, alkylaryl or arylalkyl group, that each optionally may contain one or more hetero-atoms (e.g. oxygen, phosphor, nitrogen or sulphur atoms) and/or substituents;
a ring may be present between $R^1$ and $R^2$, $R^1$ and $R^3$, and/or between $R^2$and $R^4$;
$R^3$ and/or $R^4$ may be part of a polymer chain or may be attached to a polymer chain.

5. Two-component composition according to claim 4, **characterized in that** X and/or Y are/is $C_1$-$C_{20}$ alkyl and/or $C_6$-$C_{20}$ aryl.

6. Two-component composition according to claim 4, **characterized in that** X and/or Y is a methyl group.

7. Two-component composition according to claim 6, **characterized in that** the 1,3-dioxo compound is acetylaceton.

8. Two-component composition according to anyone of claims 1-7, **characterized in that** the base is an alkaline metal or earth alkaline metal compound, preferably a potassium carboxylate.

9. Two-component composition according to any one of claims 1-8, **characterized in that** the peroxide selected from the group of hydroperoxides is a perketone, and preferably is methylethylketone peroxide.

10. Two-component composition according to any of claims 1-9, **characterized in that** the two-component composition is essentially free of cobalt.

11. Two-component composition according to any of claims 1-10, **characterized in that** the resin composition has been obtained by adding the iron compound, the 1,3-dioxo compound and the base to a resin composition comprising an unsaturated polyester resin or a vinyl ester resin.

12. Cured objects or structural parts obtained from a two-component composition according to any of claims 1-11.

13. Process for radically curing a resin composition, **characterized in that** the curing is performed starting from a two-component composition according to any one of claims 1-11 and the curing is effected essentially free of cobalt.

**14.** Process according to claim 13, **characterized in that** the curing is effected at a temperature in the range of from -20 to +200 °C, preferably in the range of from -20 to +100 °C, and most preferably in the range of from -10 to +60 °C.

**Patentansprüche**

**1.** Zweikomponentige Zusammensetzung mit einer ersten Komponente und einer zweiten Komponente, wobei es sich bei der ersten Komponente um eine Harzzusammensetzung, die ein ungesättigtes Polyesterharz oder Vinylesterharz, eine Eisenverbindung, eine 1,3-Dioxoverbindung und eine Base umfaßt, handelt und die zweite Komponente eine Peroxidverbindung mit der Formel ROOH, worin R für Wasserstoff oder eine gegebenenfalls substituierte Alkylgruppe steht, umfaßt; mit der Maßgabe, daß die Harzzusammensetzung frei von Treibmitteln ist.

**2.** Zweikomponentige Zusammensetzung nach Anspruch 1, **dadurch gekennzeichnet, daß** die Base aus der Gruppe der tertiären Amine, Alkalimetallverbindungen und/oder Erdalkalimetallverbindungen ausgewählt ist.

**3.** Zweikomponentige Zusammensetzung nach Anspruch 1 oder 2, **dadurch gekennzeichnet, daß** es sich bei der Eisenverbindung um ein Eisencarboxylat oder Eisenacetoacetat handelt.

**4.** Zweikomponentige Zusammensetzung nach einem der Ansprüche 1-3, **dadurch gekennzeichnet, daß** es sich bei der 1,3-Dioxoverbindung um eine Verbindung der folgenden Formel handelt:

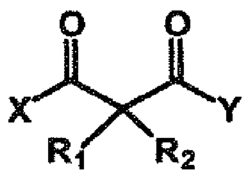

(1)

wobei

X, Y = H, $C_1$-$C_{20}$-Alkyl, $C_6$-$C_{20}$-Aryl, Alkylaryl, Arylalkyl, Teil einer Polymerkette, $OR^3$, $NR^3R^4$;
$R^1$, $R^2$ $R^3$ und $R^4$ jeweils individuell für Wasserstoff (H) oder eine $C_1$ -$C_{20}$-Alkyl-, $C_6$ -$C_{20}$-Aryl-, Alkylaryl- oder Arylalkylgruppe, die jeweils gegebenenfalls ein oder mehrere Heteroatome (z.B. Sauerstoff-, Phosphor-, Stickstoff- oder Schwefelatome) und/oder Substituenten enthalten kann, stehen können;
zwischen $R^1$ und $R^2$, $R^1$ und $R^3$ und/oder zwischen $R^2$ und $R^4$ ein Ring vorliegen kann;
$R^3$ und/oder $R^4$ Teil einer Polymerkette sein oder an eine Polymerkette gebunden sein können.

**5.** Zweikomponentige Zusammensetzung nach Anspruch 4, **dadurch gekennzeichnet, daß** X und/oder Y für $C_1$-$C_{20}$-Alkyl und/oder $C_6$-$C_{20}$-Aryl stehen/steht.

**6.** Zweikomponentige Zusammensetzung nach Anspruch 4, **dadurch gekennzeichnet, daß** X und/oder Y für eine Methylgruppe stehen.

**7.** Zweikomponentige Zusammensetzung nach Anspruch 6, **dadurch gekennzeichnet, daß** es sich bei der 1,3-Dioxoverbindung um Acetylaceton handelt.

**8.** Zweikomponentige Zusammensetzung nach einem der Ansprüche 1-7, **dadurch gekennzeichnet, daß** es sich bei der Base um eine Alkalimetall- oder Erdalkalimetallverbindung, vorzugsweise ein Kaliumcarboxylat, handelt.

**9.** Zweikomponentige Zusammensetzung nach einem der Ansprüche 1-8, **dadurch gekennzeichnet, daß** es sich bei dem aus der Gruppe der Hydroperoxide ausgewählten Peroxid um ein Perketon und vorzugsweise Methylethylketonperoxid handelt.

**10.** Zweikomponentige Zusammensetzung nach einem der Ansprüche 1-9, **dadurch gekennzeichnet, daß** die zweikomponentige Zusammensetzung im wesentlichen cobaltfrei ist.

**11.** Zweikomponentige Zusammensetzung nach einem der Ansprüche 1-10, **dadurch gekennzeichnet, daß** die Harzzusammensetzung durch Zugabe der Eisenverbindung, der 1,3-Dioxoverbindung und der Base zu einer Harzzusammensetzung, die ein ungesättigtes Polyesterharz oder Vinylesterharz umfaßt, erhalten worden ist.

**12.** Gehärtete Gegenstände oder Bauteile, erhalten aus einer zweikomponentigen Zusammensetzung nach einem der Ansprüche 1-11.

**13.** Verfahren zur radikalischen Härtung einer Harzzusammensetzung, **dadurch gekennzeichnet, daß** die Härtung ausgehend von einer zweikomponentigen Zusammensetzung nach einem der Ansprüche 1-11 durchgeführt wird und die Härtung im wesentlichen cobaltfrei erfolgt.

**14.** Verfahren nach Anspruch 13, **dadurch gekennzeichnet, daß** die Härtung bei einer Temperatur im Bereich von -20 bis +200°C, vorzugsweise im Bereich von -20 bis +100°C und ganz besonders bevorzugt im Bereich von -10 bis +60°C erfolgt.

**Revendications**

**1.** Composition à deux composants comprenant un premier composant et un second composant, dans laquelle le premier composant est une composition de résine comprenant une résine de polyester insaturé ou une résine d'ester vinylique, un composé du fer, un composé 1,3-dioxo et une base ; le second composant comprend un composé peroxyde répondant à la formule ROOH, dans laquelle R est l'hydrogène ou un groupe alkyle facultativement substitué ; à condition que la composition de résine soit exempte d'agents moussants.

**2.** Composition à deux composants selon la revendication 1, **caractérisée en ce que** la base est choisie dans le groupe des amines tertiaires, des composés de métaux alcalins et/ou des composés de métaux alcalinoterreux.

**3.** Composition à deux composants selon la revendication 1 ou 2, **caractérisée en ce que** le composé du fer est un carboxylate de fer ou un acétoacétate de fer.

**4.** Composition à deux composants selon l'une quelconque des revendications 1-3, **caractérisée en ce que** le composé 1, 3-dioxo est un composé répondant à la formule suivants :

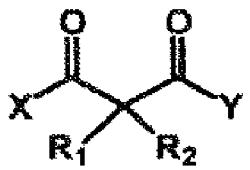

(1)

dans laquelle

X, Y = H, un alkyle en $C_1$-$C_{20}$, un aryle en $C_6$-$C_{20}$, un alkylaryle, un arylalkyle, une partie d'une chaine de polymère, $OR^3$, $NR^3R^4$ ;
$R^1$, $R^2$ $R^3$ et $R^4$ peuvent chacun individuellement représenter l'hydrogène (H) ou un groupe alkyle en $C_1$-$C_{20}$, aryle en $C_6$-$C_{20}$, alkylaryle ou arylalkyle, qui peuvent chacun facultativement contenir un ou plusieurs hétéroatomes (par exemple des atomes d'oxygène, de phosphore, d'azote ou de soufre) et/ou substituants ; un cycle peut être présent entre $R^1$ et $R^2$, $R^1$ et $R^3$ et/ou entre $R^2$ et $R^4$ ;
$R^3$ et/ou $R^4$ peuvent faire partie d'une chaîne de polymère ou peuvent être attachés à une chaîne de polymère.

**5.** Composition à deux composants selon la revendication 4, **caractérisée en ce que** X et/ou Y est/sont un alkyle en $C_1$-$C_{20}$ et/ou un aryle en $C_6$-$C_{20}$.

6. Composition à deux composants selon la revendication 4, **caractérisée en ce que** X et/ou Y est un groupe méthyle.

7. Composition à deux composants selon la revendication 6, **caractérisée en ce que** le composé 1,3-dioxo est l'acétylacétone.

8. Composition à deux composants selon l'une quelconque des revendications 1-7, **caractérisée en ce que** la base est un composé de métal alcalin ou de métal alcalinoterreux, de préférence un carboxylate de potassium.

9. Composition à deux composants selon l'une quelconque des revendications 1-8, **caractérisée en ce que** le peroxyde choisi dans le groupe des hydroperoxydes est une percétone, et de préférence est le peroxyde de méthyléthylcétone.

10. Composition à deux composants selon l'une quelconque des revendications 1-9, **caractérisée en ce que** la composition à deux composants est essentiellement exempte de cobalt.

11. Composition à deux composants selon l'une quelconque des revendications 1-10, **caractérisée en ce que** la composition de résine a été obtenue par ajout du composé du fer, du composé 1,3-dioxo et de la base à une composition de résine comprenant une résine de polyester insaturé ou une résine d'ester vinylique.

12. Objets durcis ou pièces de structure obtenus à partir d'une composition à deux composants selon l'une quelconque des revendications 1-11.

13. Procédé de durcissement radicalaire d'une composition de résine, **caractérisé en ce que** le durcissement est effectué à partir d'une composition à deux composants selon l'une quelconque des revendications 1-11 et le durcissement est effectué essentiellement sans cobalt.

14. Procédé selon la revendication 13, **caractérisé en ce que** le durcissement est effectué à une température dans la plage de -20 à +200 °C, de préférence dans la plage de -20 à +100 °C et de façon préférable pardessus tout dans la plage de -10 à +60 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4524177 A
- US 5235010 A
- US 5451556 A
- WO 9012824 A


### Non-patent literature cited in the description


- **W. D. Cook et al.** *Polym. Int.,* 2001, vol. 50, 129-134
- **M. Malik et al.** *J.M.S. - Rev. Macromol. Chem. Phys.,* 2000, vol. C40 (2, 3), 139-165